# EUROPÄISCHE PATENTSCHRIFT

(11) **EP 1 507 698 B1**
(45) Veröffentlichungstag und Bekanntmachung des Hinweises auf die Patenterteilung: **22.08.2007**
(21) Anmeldenummer: 03755896.2
(22) Anmeldetag: 16.05.2003
(51) Int. Cl.: B63B 1/38, B63H 11/04

(54) **ANTRIEBSSYSTEM FÜR EIN SCHNELLES SEEGEHENDES SCHIFF, INSBESONDERE EIN MARINE-(NAVY) SCHIFF**
PROPULSION SYSTEM FOR A FAST SEAGOING SHIP, ESPECIALLY A NAVAL SHIP
SYSTEME D'ENTRAINEMENT POUR VAISSEAU MARIN RAPIDE, NOTAMMENT POUR NAVIRE DE GUERRE

(30) Priorität: 29.05.2002 DE 10224012
(43) Veröffentlichungstag der Anmeldung: 23.02.2005
(73) Patentinhaber: SIEMENS AKTIENGESELLSCHAFT, 80333 München (DE)
(72) Erfinder: ABDEL-MAKSOUD, Moustafa, 14165 Berlin (DE); RZADKI, Wolfgang, 21509 Glinde (DE); SADLER, Karl-Otto, 22159 Hamburg (DE)
(86) Internationale Anmeldenummer: PCT/DE2003/001591
(87) Internationale Veröffentlichungsnummer: WO 2003/101820

(56) Entgegenhaltungen:
- FR-A- 1 563 913
- US-A- 3 342 032
- US-A- 4 979 917
- US-A- 5 588 886
- GOOSSENS L: "A New Design Lay-Out with Alternative Propulsion on High Speed Displacement Ships" , INTERNATIONAL MARINE DESIGN CONFERENCE AND SUMMER MEETING OF THE GERMAN SOCIETY OF NAVAL ARCHITECTS, XX, XX, VOL. 1, NR. 1, PAGE(S) 111-124 XP002109514 Abbildung 9; Tabelle 2

## Beschreibung

Die Erfindung betrifft ein Antriebssystem für ein schnelles seegehendes Schiff, insbesondere ein Marine-Schiff, mit einem Antrieb durch zumindest einen in einem Pumpenaggregat mit Austrittsdüse erzeugten Wasserstrahl und vorzugsweise einem durch zumindest einen Propeller erzeugten Propellerstrom.

Es ist Aufgabe der Erfindung, ein Antriebssystem für ein schnelles seegehendes Schiff, etwa ein Passagierschiff oder eine Ropax-Fähre, insbesondere aber ein Marine-Schiff, anzugeben, das gegenüber den bisher bekannten Systemen eine Abgasfahne vermeiden kann und die Ortung des Schiffes durch bekannte Sensoren, wie Infrarotsensoren und optische Sensoren wesentlich erschwert bzw. unmöglich macht.

Schnelle seegehende Marine-Schiffe mit einem Antrieb durch Waterjets und Propeller sind als Vorschlag bekannt, so z.B. aus dem Aufsatz von Günter Guseck, "Kommt die Fregatte der Zukunft aus Deutschland?", in der Zeitschrift Marineforum, 76. Jahrgang, September 2001, Seite 8.

Aus den bisher vorliegenden Vorschlägen, z.B. auch aus den Internet - Informationen der Firma Rolls-Royce -, kann jedoch nicht entnommen werden, wie besonders emissionsarme bzw. e-missionsfreie schnelle seegehende Schiffe, die durch einen Waterjet angetrieben werden, auszubilden sind. Insbesondere ist eine Strömungsführung am Boden derartiger Schiffe in den bekannten Vorschlägen nicht angesprochen.

Aus der US 4979917 ist ein Antriebssystem für ein Schiff mit einem Antrieb durch zumindest einen in einem Pumpenaggregat mit Austrittsdüse für das Wasser erzeugten Wasserstrahl (Waterjet) bekannt, bei dem der Wasserstrahl hinter dem Pumpenaggregat zugefügte Abgase mindestens einer Antriebseinrichtung mitführt, wobei der Wasserstrahl in zumindest einer Wasserstrahlantriebseinheit mittels einer durch die Antriebseinrichtung angetriebenen Pumpe erzeugt wird und wobei die Abgase dem Wasserstrahl in einem Unterdruckfeld im Bereich des Wasserstrahlaustritts aus dem Pumpenaggregat mit Pumpe zugeführt werden.

Die obenstehend beschriebene Aufgabe wird gelöst durch ein Antriebssystem mit den Merkmalen des Patentanspruchs 1. Der Wasserstrahl führt hierbei hinter dem Pumpenaggregat zugeführte Gase, insbesondere Abgase, mindestens einer Antriebseinrichtung, insbesondere bestehend aus einer Energieerzeugungseinheit und einem Generator, mit, wobei der Wasserstrahl in zumindest einer, Wasserstrahlantriebseinheit mittels einer durch z.B. einen Elektromotor oder direkt über eine Dieselmaschine oder eine Gasturbine angetriebenen Pumpe erzeugt wird, deren Antriebsenergie durch z.B. einen Generatorsatz erzeugt wird.

Durch die erfindungsgemäße Lösung kann eine direkte Abgaseinführung in das Wasser erreicht werden, die besonders vorteilhaft ist. Die bekannte Abgasfahne entfällt und ist damit weder durch.Infrarotsensoren noch optisch zu orten. Dies gilt vorteilhafterweise auch bei Volllastbetrieb, d.h. bei Höchstfahrt. Auch die typischen Geräusche eines Abgaskamins entfallen. Die Abgase können dabei sowohl von einer Dieselanlage als auch von einer Gasturbinenanlage als auch von einer Dampfturbine oder von einem Kombiantrieb zum Antrieb der Wasserstrahlantriebseinheiten stammen.

In Ausgestaltung der Erfindung ist vorgesehen, dass die Gase dem Wasserstrahl in einem Unterdruckfeld im Bereich des Wasserstrahlaustritts aus einem Pumpenaggregat mit Pumpe zugeführt werden. So braucht vorteilhaft keine Hilfsenergie für das Ausstoßen des Abgases aufgewendet werden, auch ein entsprechendes Aggregat entfällt. Besonders vorteilhaft ist dabei, dass bei einem Generatorsatz, der aus einer Gasturbine und einem Generator besteht, der Wirkungsgrad der Gasturbine nicht durch Gegendruck verschlechtert wird. So ergibt sich kein schlechterer, sondern im Gegenteil evtl. ein etwas besserer Wirkungsgrad als bei einem freien Austritt des Gasturbinenabgasstrahls in die Atmosphäre.

In weiterer Ausgestaltung der Erfindung ist vorgesehen, dass der Wasserstrahl sein Wasser gegenüber dem Schiffsboden abwärts geneigt abstrahlt. Auch die Abgase einer beliebigen E-nergieerzeugungseinheit, z.B. einer Dampfturbinenanlage oder eines Dieselreformers einer Brennstoffzellenanlage, können so in das Wasser eingeleitet werden. So ergibt sich vorteilhafterweise eine verringerte Reibung des Wasserstrahls am Schiffsboden bei einer guten Verteilung der mitgeführten Gase im wasser.

In Ausbildung der Erfindung ist dabei vorgesehen, dass vorteilhaft vom Wasserstrahl Gasblasen gebildet und dass die Gasblasen zum größeren Teil unter den Schiffsboden gelenkt werden. So ergibt sich vorteilhaft, dass die Gasblasen bis hinter das Schiffsheck geleitet werden, wo sie sich im Abströmfeld mit seinen Wirbeln auflösen und daher keine Ortung des Abgases erlauben. Passagiere, z.B. auf dem Achterdeck einer Megayacht, bemerken die Abgase nicht.

Weiterhin ist vorgesehen, dass die Gasblasen teilweise an den Schiffsseiten austreten. So ergibt sich eine vorteilhafte Verringerung der Reibung auch an den Schiffsseiten.

Bei der Ausgestaltung des Antriebssystems ist vorteilhaft vorgesehen, dass es außer Wasserstrahlantriebseinheiten zwei Propellerantriebseinheiten, vorzugsweise elektrische Ruderpropeller, aufweist und dass der Wasserstrahl mit den Gasblasen unter dem Schiffsboden im wesentlichen mittig zwischen den Propellern hindurchgeführt wird. So ergibt sich trotz der Anordnung zweier völlig unterschiedlicher Antriebskomponenten eine günstige Anströmung des achtern angeordneten Teils der Antriebskomponenten. Es ist dabei vorteilhaft vorgesehen, dass die Propeller, etwa elektrische Ruderpropeller, auf einen Vortrieb in einem Gasblasen-Wasser-Gemisch eingestellt werden. So ergibt sich ein günstiger Gesamtwirkungsgrad des Antriebssystems.

Das Wasser-Gas-Gemisch des Antriebssystems wird vorteilhaft im Mittelteil des Schiffes erzeugt und von dort im wesentlichen am Schiffsboden entlang nach achtern geführt. So ergibt sich eine vorteilhafte Möglichkeit, die erfindungsgemäße Vermischung der Gasblasen mit dem Wasser über eine relativ lange Wegstrecke vorzunehmen. Außerdem ergibt sich der Vorteil, dass die einzelnen Antriebskomponenten räumlich voneinander relativ weit entfernt sind. Dies erhöht die Standfestigkeit des Antriebssystems bei Treffern, z.B. bei Marine-Schiffen.

Es ist fernerhin vorteilhaft weiter vorgesehen, dass das Wasser-Gas-Gemisch als mehrstrahlige, jeweils für sich, durch die aufsteigenden Gasblasen gebildete, rotierende, Drallströmung ausgebildet ist. So kann vorteilhaft eine besonders gute Verteilung des Gases in dem Nachstromfeld des Schiffes erreicht werden.

In einer anderen Ausbildung der Erfindung ist vorgesehen, dass das Wasser-Gas-Gemisch als mehrstrahlige Fächerströmung ausgebildet ist. Diese Ausbildung führt zu einer besonders reibungsarmen Heckströmung und erlaubt Pumpenaggregate, die nur einen geringen Überstand über den Unterboden des Schiffes aufweisen. Diese Ausführung ist daher insbesondere für relativ kleine Einheiten, wie Schnellboote oder Minenräumer, aber auch Megayachten, vorteilhaft.

In vorteilhafter Ausbildung der Erfindung ist eine Wasserstrahlantriebseinheit für das Antriebssystem vorgesehen, die über eine Kammer, vorzugsweise ein koaxiales Abgasdüsensegment abgekürzt KADS, für die Zuführung von Gas, insbesondere Abgas, zum Wasserstrahl verfügt, wobei die Gaszuführung vorteilhaft in einem Unterdruckgebiet der Kammer erfolgt. So läßt sich die Einleitung der Gase, insbesondere der Abgase, ohne Hilfsaggregat verwirklichen.

Es ist dabei besonders vorteilhaft vorgesehen, dass die Austrittsdüse des Pumpenaggregats und ihr Gehäuse nicht rund, sondern insbesondere oval ausgebildet ist. So kann vorteilhaft eine besonders günstige Strahlausbildung des Gas-WasserGemisches unter dem Schiffsboden erreicht werden. Dabei können die Austrittsdüsen auch die Form flacher Rechtecke aufweisen. Die vorteilhafte Wirkung der Führung des Gas-WasserGemisches unter dem Schiffsboden bleibt erhalten; der Überstand des Gehäuses unter dem Schiffsboden wird weiter verringert.

Weiterhin ist vorteilhaft vorgesehen, dass die Austrittsdüse Strahlquerschnittseinstellelemente für den Wasserstrahl innerhalb des koaxialen Abgasdüsensegmentes abgekürzt KADS, z.B. eine Ringblende oder Leitbleche, aufweist. So ist eine Steuerbarkeit und Regelbarkeit sowohl der Schiffsgeschwindigkeit als auch der Richtung des Schiffes möglich.

Die Wasserstrahlantriebseinheit ist vorteilhaft in einem nach oben eingezogenen Bereich des Schiffs angeordnet. So ergibt sich eine besonders strömungsgünstige Ausbildung des Schiffsbodens mit einer nur geringfügigen Widerstandserhöhung durch das Gehäuse der Wasserstrahlantriebseinheit.

Die Erfindung wird anhand von Zeichnungen näher erläutert, aus denen, ebenso wie aus den Unteransprüchen, auch weitere erfindungswesentliche Einzelheiten entnehmbar sind.

Es zeigen im Einzelnen:
- FIG 1: eine Gittertopologie von zwei Wasserstrahlantriebseinheitgehäusen und der Unterbodenform im Bereich von Wasserstrahlantriebseinheitgondeln;
- FIG 2: der Stromlinienverlauf zwischen den Wasserstrahlantriebseinheites und Ruderpropellern;
- FIG 3: die Nachstromfelder in der Propellerebene der Ruderpropeller;
- FIG 4: Strömungsvektoren in vier Querschnittsebenen der Wasserstrahlen sowie
- FIG 5: die Prinzipskizze eines Waterjets mit Abgaszumischung im koaxialen Abgasdüsensegment abgekürzt KADS.

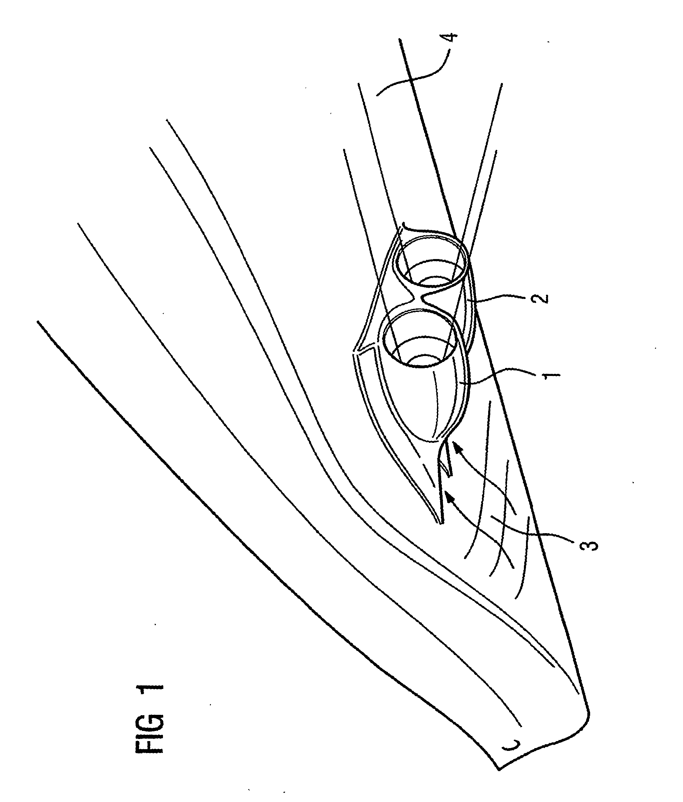

In FIGUR 1 sind mit 1 und 2 die Gehäuse der Wasserstrahlantriebseinheiten bezeichnet, die sich in einem eingezogenen Teil 3 des Unterbodens 4 des Schiffes befinden. In dieser Position ergeben sich sehr gute Ein- und Ausströmverhältnisse für die Waterjets 1, 2, die vorteilhaft bezüglich ihres Abstandes zum Schiffsunterboden 4 in etwa der Aufkimmung des Schiffsbodens angepaßt werden.

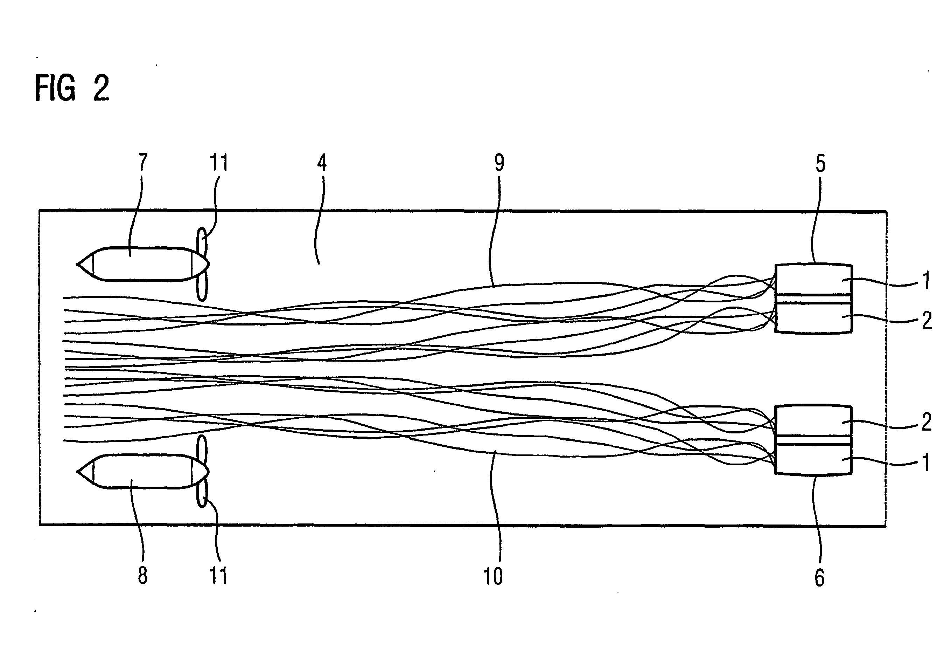

In FIGUR 2 bezeichnen 5 und 6 Wasserstrahlantriebseinheit-Gehäusepaare sowie 7 und 8 Gehäuse von elektrischen Ruderpropellern. Wie ersichtlich, verlaufen die Stromlinien 9, 10 aus den Wasserstrahlantriebseinheit-Gehäusen 5, 6 im Bereich der Ruderpropeller 7, 8 eingeschnürt, wenn die Vorschubleistung (Drehzahl und Drehmoment) der elektrischen Ruderpropeller 7, 8 entsprechend eingestellt ist. Bei FIGUR 2 handelt es sich um eine Computersimulation; tatsächlich kann sich bei anderen Fahrtzuständen eine gewisse Auffächerung der Stromlinien ergeben. Das Grundprinzip, dass der Hauptstrom der Wasserstrahlantriebseinheites durch den Innenbereich der Ruderpropeller 7, 8 verläuft, bleibt jedoch erhalten.

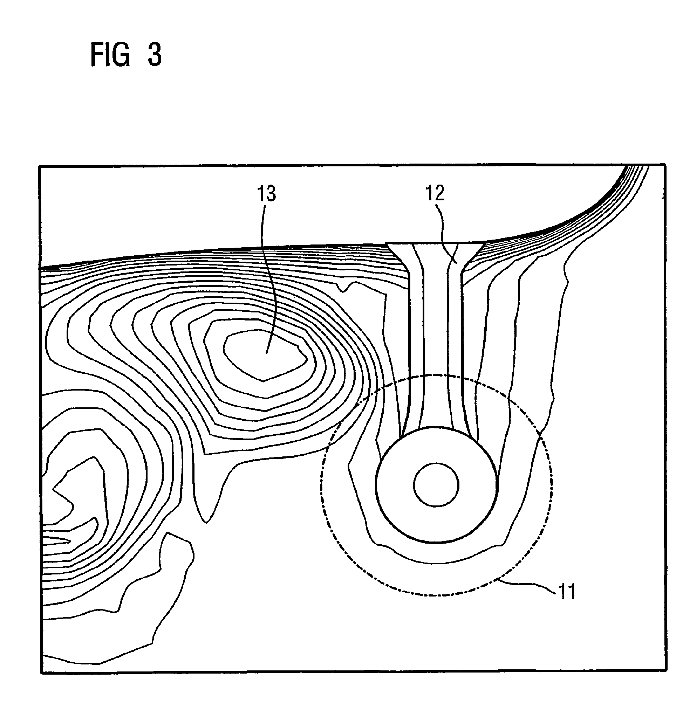

Aus FIGUR 3 ist die Strömungsverteilung in der Ebene der Propeller 11 der elektrischen Ruderpropeller 12 ersichtlich. Es ergibt sich im wesentlichen ein geschlossenes Strömungsfeld 13 mit der Folge, dass die Masse der Gasblasen im Nachstromfeld des Schiffes austritt und bei der hier herrschenden Verwirbelung auf eine nicht mehr detektierbare Größe kommt.

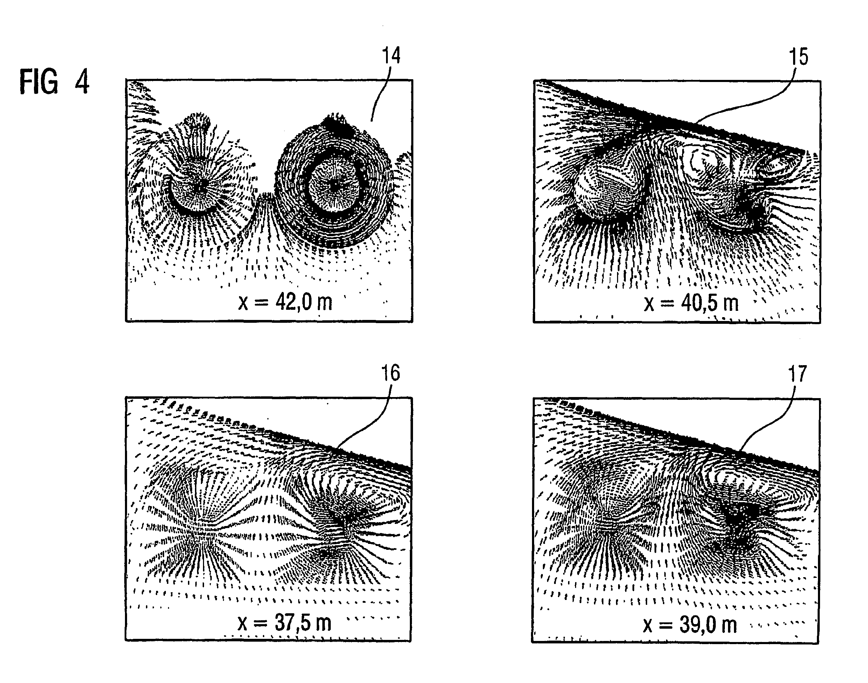

Aus FIGUR 4 ist zu ersehen, wie sich die Wasserstrahlen in der Abströmung verhalten. Bei der Ebene entsprechend 14 ist sie noch geschlossen, bei wachsendem Abstand erfolgt jedoch eine Auffächerung, die mit 15, 17 und 16 bezeichnet ist; der wachsende Abstand von dem Austritt auf den Wasserstrahlantriebseinheitgehäusen ist aus der kleiner werdenden Größe X ersichtlich. Der Einfluß der aufsteigenden Luftblasen führt zu einer deutlich erkennbaren Verzerrung des Strömungsfeldes.

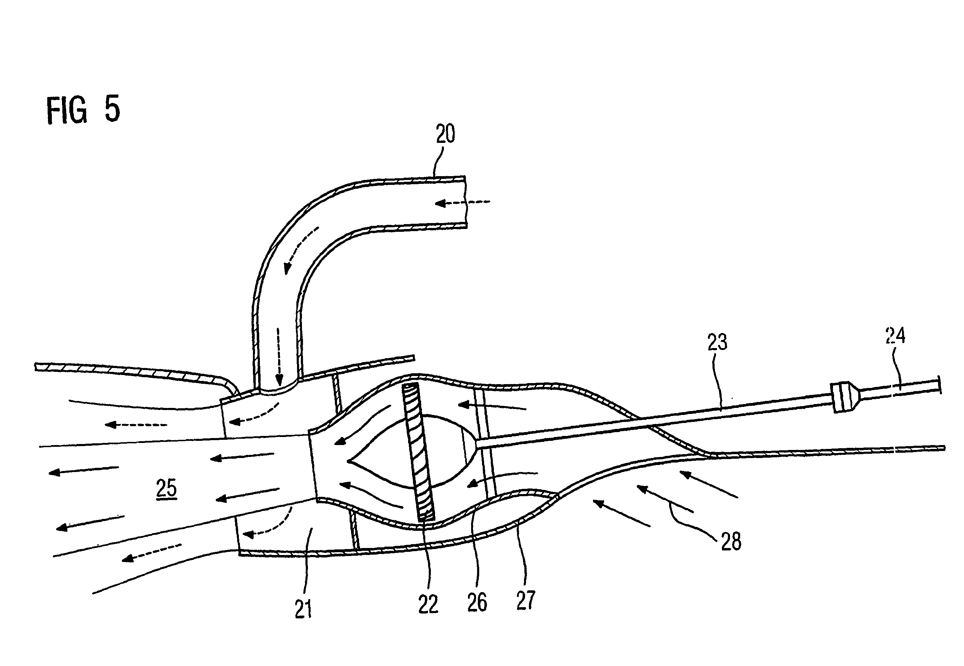

In FIGUR 5 bezeichnet 22 das Laufrad am Ende der Pumpenwelle 23. Diese steht über die Welle 24 mit einem Motor in Verbindung, der etwa ein Elektromotor, aber auch ein Dieselmotor oder eine Gasturbine sein kann. Der Motor ist nicht eingezeichnet. Von seiner Ausführung ist die Länge der Welle 24 abhängig. Um sie möglichst kurz ausführen zu können, ist ein Motor mit kleineren Abmessungen vorteilhaft, etwa ein Elektromotor mit HTSL-Wicklungen.

Der Wasserstrahl ist mit 25 bezeichnet. Er tritt aus der Mischkammer 21 unter Mitreißen der durch das Abgasrohr 20 zugeführten Abgase aus. Die Mischkammer 21 ist vorteilhaft als koaxiales Abgasdüsensegement, abgekürzt KADS, ausgebildet. Dieses koaxiale Abgasdüsensegment ; abgekürzt KADS, bildet vorteilhaft den hinteren Abschluß des Gondelgehäuses 27, in dem sich das Pumpengehäuse 26 befindet. Die Wassereinströmung ist mit 24 bezeichnet. <o> =

## Patentansprüche

1. Antriebssystem für ein schnelles seegehendes Schiff, insbesondere ein Marine-Schiff, mit einem Antrieb durch zumindest einen in einem Pumpenaggregat mit Austrittsdüse für das Wasser erzeugten Wasserstrahl und einem durch zumindest einen Propeller erzeugten Propellerstrom, wobei der Wasserstrahl hinter dem Pumpenaggregat zugefügte Abgase mindestens einer Antriebseinrichtung, insbesondere bestehend aus einer Energieerzeugungseinrichtung und einem Generator, mitführt, wobei der Wasserstrahl in zumindest einer Wasserstrahlantriebseinheit mittels einer durch z.B. einen Elektromotor angetriebenen Pumpe erzeugt wird, deren Antriebsenergie durch z.B. einen Generatorsatz erzeugt wird, wobei die Abgase dem Wasserstrahl (25) in einem Unterdruckfeld im Bereich des Wasserstrahlaustritts aus dem Pumpenaggregat (22, 26) mit Pumpe (22) zugeführt werden, wobei vom Wasserstrahl (25) Gasblasen gebildet und diese Gasblasen zum größeren Teil unter den Schiffsboden gelenkt werden, wobei diese Gasblasen teilweise an den Schiffsseiten austreten und wobei das Wasser-Abgas-Gemisch des Antriebssystems im Mittelteil des Schiffes erzeugt wird und von dort im wesentlichen am Schiffsboden entlang nach Achtern strömt.

2. Antriebssystem nach Anspruch 1, **dadurch gekennzeichnet, dass** der Wasserstrahl (25) sein Wasser gegenüber dem Schiffsboden durch eine Düse abwärts geneigt abstrahlt, insbesondere in einem Winkel vom 3 bis 7 Grad.

3. Antriebssystem nach Anspruch 1 oder 2, **dadurch gekennzeichnet, dass** es außer den Wasserstrahlantriebseinheiten (5, 6) zwei Propellerantriebseinheiten, vorzugsweise zwei elektrische Ruderpropeller (7, 8), aufweist und dass der Wasserstrahl (9, 10) mit den Gasblasen unter dem Schiffsboden im wesentlichen mittig zwischen den Propellern hindurchgeführt wird.

4. Antriebssystem nach Anspruch 3, **dadurch gekennzeichnet, dass** die Propeller, etwa die elektrischen Ruderpropeller (7, 8), auf einen Vortrieb in einem Gasblasen-Wassergemisch eingestellt werden.

5. Antriebssystem nach einem oder mehreren der vorhergehenden Ansprüche, **dadurch gekennzeichnet, dass** das Wasser-Gas-Gemisch als mehrstrahlige, jeweils für sich, durch die aufsteigenden Gasblasen gebildete, rotierende Drallströmung ausgebildet ist.

6. Antriebssystem nach einem oder mehreren der Ansprüche 1 bis 5, **dadurch gekennzeichnet, dass** das Wasser-Gas-Gemisch als mehrstrahlige Fächerströmung ausgebildet ist.

7. Antriebssystem nach einem oder mehreren der vorhergehenden Ansprüche, **dadurch gekennzeichnet, dass** die Wasserstrahlantriebseinheit über eine Kammer (21), vorzugsweise ein Koaxial-Düsensegment, für die Zuführung von Gas, insbesondere Abgas, zum Wasserstrahl (25) verfügt, wobei die Gaszuführung in einem Unterdruckgebiet der Kammer (21) erfolgt.

8. Antriebssystem nach Anspruch 7, **dadurch gekennzeichnet, dass** die Austrittsdüse für das Wasser und ihr Gehäuse (27) nicht rund, sondern insbesondere oval ausgebildet ist.

9. Ansriebssystem nach Anspruch 7, **dadurch gekennzeichnet, dass** die Austrittsdüse für das Wasser im Wesentlichen die Form eines flachen Rechtecks aufweist.

10. Antriebssystem nach einem der Ansprüche 7 bis 9, **dadurch gekennzeichnet, dass** die Austrittsdüse für das Wasser Strahlquerschnitts- und Richtungsänderungselemente aufweist, z.B. eine Ringblende oder eine Stahlblechjalousie.

11. Antriebssystem nach einem oder mehreren der Ansprüche 7 bis 10, **dadurch gekennzeichnet, dass** die Wasserstrahlantriebseinheit in einem nach oben eingezogenen Bereich (3) des Unterbodens (4) des Schiffes angeordnet ist.

## Claims

1. Propulsion system for a fast seagoing ship, especially a naval ship, driven by at least one water jet produced in a pump assembly with an outlet nozzle for the water and a propeller jet produced by at least one propeller, with the water jet carrying along exhaust gases that are introduced downstream of the pump assembly, especially exhaust gases of at least one propulsion device, which especially comprises a power generation device and a generator, with the water jet being generated in at least one water jet propulsion unit by means of a pump that is for example driven by an electric motor, the propulsion power of which is generated for example by a generator assembly, with the exhaust gases being fed to the water jet (25) in a low-pressure field in the region of the outlet of the water jet from a pump assembly (22, 26) with a pump (22), with gas bubbles being formed by the water jet (25) and said gas bubbles being for the most part directed under the bottom of the ship, with said gas bubbles occurring to some extent at the sides of the ship and with the water/exhaust gas mixture of the propulsion system being produced in the central section of the ship and being directed from there to the rear essentially along the bottom of the ship.

2. Propulsion system according to claim 1,
**characterised in that** the water jet (25) emits its water at a downward angle toward the bottom of the ship through a nozzle, in particular at an angle of 3 to 7 degrees

3. Propulsion system according to claim 1 or 2, **characterised in that** in addition to the water jet propulsion units (5, 6) it has two propeller drive units, preferably two electric rudder propellers (7, 8), and that the water jet (9, 10) and the gas bubbles are directed below the bottom of the ship essentially in the centre between the propellers.

4. Propulsion system according to claim 3, **characterised in that** the propellers, possibly the electric rudder propellers (7, 8), are set for forward drive in a gas bubble/water mixture.

5. Propulsion system according to one or a plurality of the preceding claims, **characterised in that** the water/gas mixture is configured as a multijet helical flow, rotating in each instance per se and formed by the rising gas bubbles.

6. Propulsion system according to one or a plurality of claims 1 to 5, **characterised in that** the water/gas mixture is configured as a multijet fan flow.

7. Propulsion system according to one or a plurality of the preceding claims, **characterised in that** the water jet propulsion unit has a chamber (21), preferably a coaxial nozzle segment for the supply of gas, in particular exhaust gas, to the water jet (25), with the gas being supplied in a low-pressure region of the chamber (21).

8. Propulsion system according to claim 7,
**characterised in that** the outlet nozzle for the water and its housing (27) are not configured as round but in particular as oval.

9. Propulsion system according to claim 7,
**characterised in that** the outlet nozzle for the water is essentially in the form of a flat rectangle.

10. Propulsion system according to one of claims 7 to 9, **characterised in that** the outlet nozzle for the water has elements to change the cross section and direction of the jet, e.g. a ring diaphragm or a sheet steel shutter.

11. Propulsion system according to one or a plurality of claims 7 to 10, **characterised in that** the water jet propulsion unit is arranged in a region (3) incorporated upward in the lower bottom (4) of the ship.

## Revendications

1. Système de propulsion d'un bâtiment de navigation hauturier rapide, notamment d'un bâtiment de navigation de guerre, comportant une propulsion par au moins un jet d'eau généré dans un groupe de pompage dotée d'une tuyère de sortie de l'eau et un courant d'hélice généré par au moins une hélice, le jet d'eau emportant avec lui des gaz d'échappement, ajoutés en arrière du groupe de pompage, d'au moins un dispositif d'entraînement, constitué notamment d'un dispositif de génération d'énergie et d'un générateur, le jet d'eau étant généré dans au moins un groupe de propulsion de jet d'eau au moyen d'une pompe qui est entraînée par exemple par un moteur électrique et dont l'énergie d'entraînement est générée par exemple par un ensemble de générateurs, les gaz d'échappement étant amenés au jet d'eau (25) dans une zone de dépression dans la région de la sortie de jet d'eau du groupe de pompage (22, 26) comportant une pompe (22), des bulles de gaz étant formées par le jet d'eau (25), et ces bulles de gaz sont déviées pour la plus grande partie sous le fond du bâtiment de navigation, ces bulles de gaz sortant partiellement sur les côtés du bâtiment de navigation et le mélange eau-gaz d'échappement du système d'entraînement étant généré dans la partie médiane du bâtiment de navigation et s'écoulant de là vers l'arrière sensiblement le long du fond du bâtiment de navigation.

2. Système d'entraînement selon la revendication 1, **caractérisé en ce que** le jet d'eau (25) projette son eau obliquement vers le bas, par référence au fond du bâtiment de navigation, au moyen d'une tuyère, notamment avec un angle d'environ 3 à 7 degré.

3. Système d'entraînement selon la revendication 1 ou 2, **caractérisé en ce qu'**il comporte en plus des groupes de propulsion de jet d'eau (5, 6) deux groupes d'entraînement à hélice, avantageusement deux hélices de gouvernail électriques (7, 8) et **en ce que** le jet d'eau (9, 10) est amené avec les bulles de gaz sous le fond du bâtiment de navigation sensiblement au milieu entre les hélices.

4. Système d'entraînement selon la revendication 3, **caractérisé en ce que** les hélices, par exemple les hélices de gouvernail électriques (7, 8), sont réglées sur une propulsion dans un mélange d'eau et de bulles de gaz.

5. Système d'entraînement selon l'une ou plusieurs des revendications précédentes, **caractérisé en ce que** le mélange d'eau et de bulles de gaz est conformé en écoulement rotationnel à jets multiples formés chacun pour soi par les bulles de gaz ascendantes.

6. Système d'entraînement selon l'une ou plusieurs des revendications 1 à 5, **caractérisé en ce que** le mélange d'eau et de gaz est conformé en écoulement en éventail à jets multiples.

7. Système d'entraînement selon l'une ou plusieurs des revendications précédentes, **caractérisé en ce que** le groupe de propulsion à jet d'eau dispose d'une chambre (21), avantageusement un segment de tuyère coaxial, destinée à amener des gaz, notamment des gaz d'échappement, au jet d'eau (25), l'amenée de gaz étant effectuée dans une zone de dépression de la chambre (21).

8. Système d'entraînement selon la revendication 7, **caractérisé en ce que** la tuyère de sortie de l'eau et son boîtier (27) n'ont pas une conformation circulaire, mais ont notamment une conformation ovale.

9. Système d'entraînement selon la revendication 7, **caractérisé en ce que** la tuyère de sortie de l'eau a sensiblement la forme d'un rectangle plat.

10. Système d'entraînement selon l'une des revendications 7 à 9, **caractérisé en ce que** la tuyère de sortie de l'eau comporte des éléments permettant de modifier la direction et la section des jets, par exemple un diaphragme circulaire ou un obturateur à volet en tôle d'acier.

11. Système d'entraînement selon l'une ou plusieurs des revendications 7 à 10, **caractérisé en ce que** le groupe de propulsion de jet d'eau est placée dans une région (3), renfoncée vers le haut, du fond (4) du bâtiment de navigation.
